# EUROPÄISCHE PATENTSCHRIFT

(11) **EP 1 203 142 B1**
(45) Veröffentlichungstag und Bekanntmachung des Hinweises auf die Patenterteilung: **21.04.2004**
(21) Anmeldenummer: 00951490.2
(22) Anmeldetag: 09.08.2000
(51) Int. Cl.: F01N 3/30, F01N 3/32, F02B 37/16, F02M 25/07

(54) **BRENNKRAFTMASCHINE MIT SEKUNDÄRLUFTEINBLASSYSTEM**
INTERNAL COMBUSTION ENGINE COMPRISING A SECONDARY AIR INJECTION SYSTEM
MOTEUR A COMBUSTION INTERNE POURVU D'UN SYSTEME D'INSUFFLATION D'AIR SECONDAIRE

(30) Priorität: 10.08.1999 DE 19937781
(43) Veröffentlichungstag der Anmeldung: 08.05.2002
(73) Patentinhaber: Mann + Hummel GmbH, 71638 Ludwigsburg (DE)
(72) Erfinder: PAFFRATH, Holger, D-50259 Pulheim (DE); HUMMEL, Karl, Ernst, D-74321 Bietigheim-Bissingen (DE); KNOCH, Georg, D-71642 Ludwigsburg (DE); BUTZ, Thomas, D-70825 Korntal-Münchingen (DE); ZIRNIG, Günter, D-71679 Asperg (DE)
(74) Vertreter: Voth, Gerhard
(86) Internationale Anmeldenummer: PCT/EP2000/007738
(87) Internationale Veröffentlichungsnummer: WO 2001/011208

(56) Entgegenhaltungen:
- WO-A-97/38212
- FR-A- 2 696 787
- US-A- 4 267 812
- US-A- 5 640 848
- PATENT ABSTRACTS OF JAPAN vol. 1998, no. 05, 30. April 1998 (1998-04-30) & JP 10 008949 A (KAWASAKI HEAVY IND LTD), 13. Januar 1998 (1998-01-13)
- PATENT ABSTRACTS OF JAPAN vol. 017, no. 423 (M-1458), 6. August 1993 (1993-08-06) & JP 05 086851 A (MAZDA MOTOR CORP), 6. April 1993 (1993-04-06)

## Beschreibung

### Stand der Technik

Die Erfindung betrifft eine Brennkraftmaschine, die ein Leitungssystem für Sekundärluft zur Einleitung in den Auspufftrakt aufweist, nach der Gattung des Patentanspruches 1. Nach der Gattung des Anspruches 12 kann die Brennkraftmaschine zusätzlich ein Leitungssystem zur Abgasrückführung enthalten. Außerdem betrifft die Erfindung ein Leitungsmodul zur Integration in die Brennkraftmaschine nach der Gattung des Anspruches 13.

Sekundärlufteinblaßsysteme werden zur Reduzierung von HC und CO während des Kaltstarts von Brennkraftmaschinen eingesetzt. Mit diesen Systemen wird Frischluft auf die Abgasseite geblasen und damit eine Nachoxidation von HC und CO erzielt. Gleichzeitig erhöht sich die Abgastemperatur, der Katalysator springt früher an.

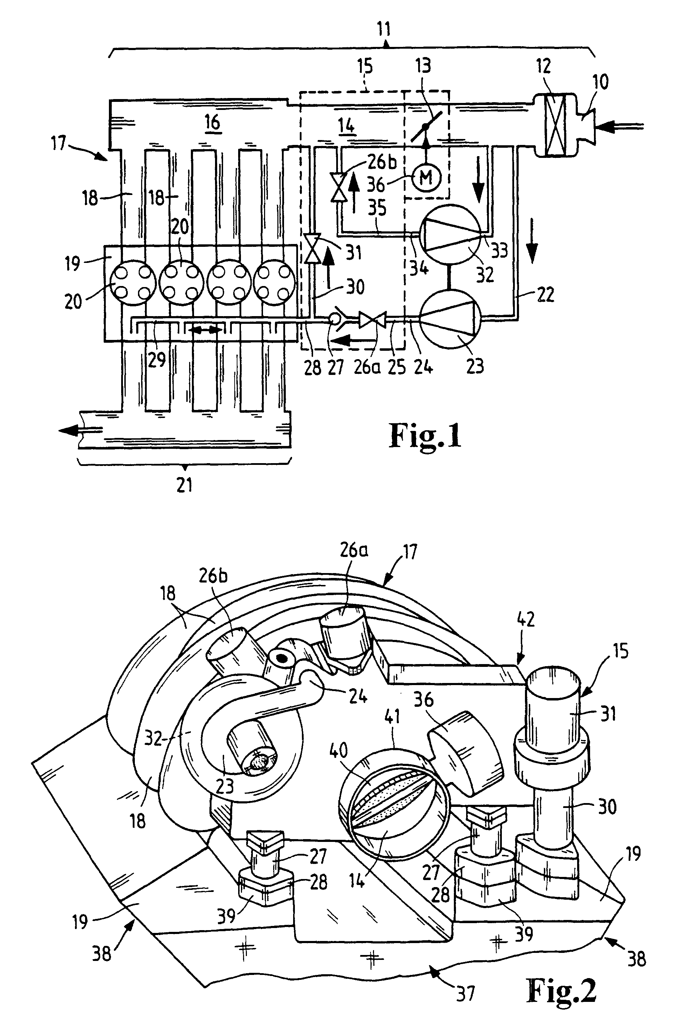

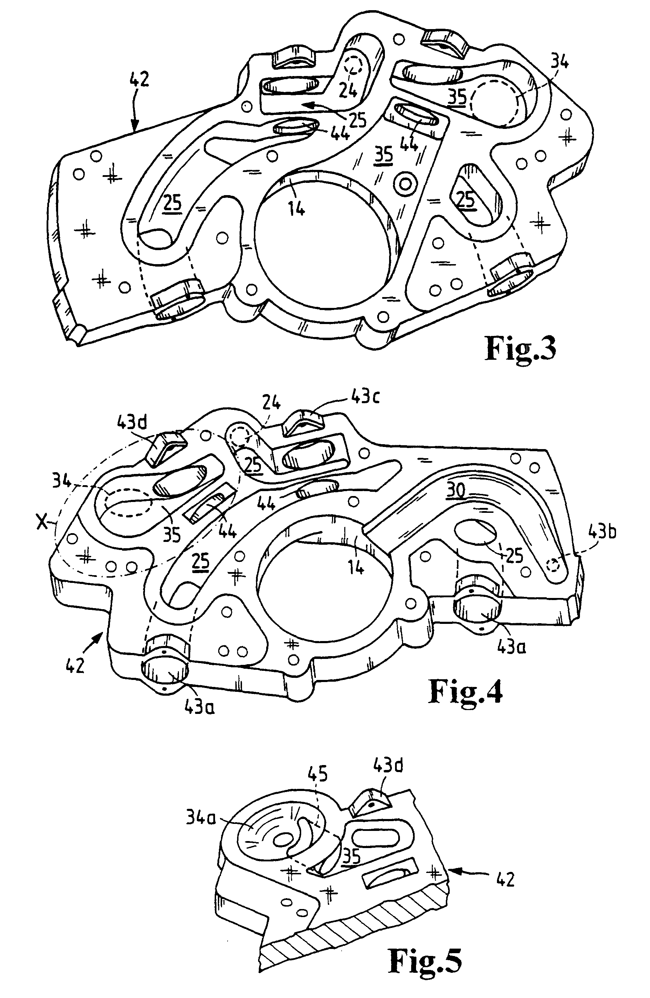

Ein solches Sekundärlufteinblaßsystem ist z. B. aus der WO 97/ 38212 bekannt. Der grundsätzliche Aufbau läßt sich der Figur 2 entnehmen. Die Sekundärluft wird durch eine Leitung 13 dem Ansaugtrakt der Brennkraftmaschine auf der Reinseite vor einer Drosselklappe 33 entnommen und durch einen Verdichter 26 über eine Leitung 14 in den Auspuffbereich 31 gepumpt. Zur Steuerung des Systems können verschiedene Ventile verwendet werden. Der Antrieb des Verdichters 26 kann entsprechend Figur 3 durch eine Turbine 35 erfolgen, die sich den Druckunterschied, der sich im Saugrohr durch die Drosselklappe 33 einstellt, zunutze macht.

Anderseits werden speziell im Teillastbereich der Brennkraftmaschine Abgasrückführsysteme eingesetzt, die zu einer Reduzierung von NOₓ führen. Ein solches System läßt sich z. B. der EP 596 855 A1 entnehmen. Entsprechend Figur 1 dieses Dokuments wird Abgas durch ein Ventil 19 in den Ansaugtrakt 14 einer Brennkraftmaschine 1 eingeleitet und vermischt sich mit der Ansaugluft. Durch diese Rückführung wird die Verbrennungstemperatur herabgesetzt und damit die Entstehung von Stickoxiden verringert. Auch diese System werden mittels Rohrleitungen, Ventilen und Verbindungselementen realisiert.

Die Leitungen für Sekundärluft und Abgasrückführung können in den Zylinderkopf integriert werden. Diese Idee wird z. B. in der US 4 267 812 vorgeschlagen. Der Zylinderkopf kann als einteiliges oder mehrteiliges Gußteil ausgeführt sein, wobei die Kanäle durch die Gußform gebildet werden. Hierdurch läßt sich Bauraum für die Luftführungssysteme sparen. Außerdem läßt sich eine Gewichtsreduzierung erreichen. Bis zu einem gewissen Grad entfällt weiterhin der Montageaufwand für das Leitungssystem zumindest für die in den Zylinderkopf integrierten Bereiche.

Auch die US 5,640,848 schlägt vor die Leitungen für Sekundärluft und Abgasrückführung in den Zylinderkopf zu integrieren. Der Zylinderkopf kann ebenso als einteiliges oder mehrteiliges Gußteil ausgeführt sein, wobei die Kanäle durch die Gußform gebildet werden. Es wird weiterhin vorgeschlagen, die Anzahl der Leitungen dadurch zu reduzieren, dass die Leitung für die Abgasrückführung und die Leitung für die Sekundärluft aus einer gemeinschaftlich genutzten Leitung gebildet wird. Dieses ist möglich, da die Betriebszustände der Brennkraftmaschine bei Abgasrückführung bzw. Sekundärlufteinblasung nie gleichzeitig auftreten.

Die für die Luftführungssysteme notwendigen Ventile, Verdichter und Regeleinrichtungen können jedoch nicht ohne weiteres in den Zylinderkopf integriert werden. Dieser Bereich der Brennkraftmaschine ist ohnehin schon außerordentlich komplex gestaltet, da Baugruppen unterschiedlichster Funktionen auf engem Raum untergebracht werden müssen. Insbesondere sind die Einlaßund Auslaßventile für die Zylinder, deren Ansteuerung sowie Antrieb dort unterzubringen. Für diese mechanischen Teile muß eine genügende Ölschmierung gewährleistet sein. Auch die Ölabscheidung sowie eine Zylinderkopfkühlung werden in diesem Brennkraftmaschinenbereich untergebracht. Daher wird die Steuerung und Regelung für Sekundärluft- bzw. Abgasrückführsysteme in Leitungsabschnitten untergebracht, die außerhalb des Zylinderkopfes liegen und eine Verbindung von diesem mit dem Saugrohrbereich vor der Drosselklappe bzw. dem Auspuffsystem gewährleisten. Hierbei tritt jedoch ein erhöhter Montage-und Fertigungsaufwand auf. Die Einzelkomponenten können teilweise erst bei der Endmontage der Brennkraftmaschine oder sogar erst bei der Montage der Motors im Motorraum angebracht werden. Hierdurch wird auch die Gefahr von Fehlern bei der Montage vergrößert. Diese wirtschaftlichen Aspekte erlauben den Einsatz der beschriebenen Leitungssyteme nur in Fahrzeugen der Mittel-und Oberklasse. Die steigenden Anforderung an die Abgaswerte von Verbrennungsmotoren läßt jedoch das Interesse steigen, ökonomische Lösung zur Verbesserung der Abgaswerte zu finden.

Aufgabe der Erfindung ist es daher, ein Leitungssystem für eine Brennkraftmaschine zur Sekundärlufteinblassung und/oder Abgasrückführung zu schaffen, welches kostengünstig in der Herstellung und zuverlässig in der Funktion ist. Diese Aufgabe wird durch Merkmale der Patentansprüche 1 und 12 gelöst. Ferner wird gemäß Anspruch 13 ein Leitungsmodul beansprucht, welches zum Einbau in eine Brennkraftmaschine geeignet ist.

### Vorteile der Erfindung

Die erfindungsgemäße Brennkraftmaschine weist zumindest ein Leitungssystem für Sekundärluft auf, welches wie bereits beschrieben aufgebaut ist. An der Brennkraftmaschine ist ein Modul befestigt, welches zumindest einen Verdichterkanal mit einem Anschluß für jede Zuführleitung, einen Anschluß für einen Verdichter und einen Leitungsabschnitt des Ansaugtraktes in sich vereint. Dadurch, daß der Leitungsabschnitt in das Modul integriert ist, kann dieses am Saugrohr befestigt werden, derart, daß die Luft von der Ansaugleitung des Ansaugtraktes durch den Leitungsabschnitt in das Saugrohr geleitet wird. Selbstverständlich ist eine Anordnung des Moduls auch in anderen Abschnitten des Ansaugtraktes denkbar.

Ein Verdichter kann Sekundärluft entweder dem Ansaugtrakt, insbesondere hinter dem Luftfilter, oder einer anderen Stelle des Motorraumes entnehmen. Dieser ist am Verdichteranschluß angebracht, wodurch die Luft in das Modul gepumpt wird. Als Verdichter kommen hydrodynamische Strömungsmaschinen, aber auch alle anderen Arten vom Pumpen in Frage, die z.B. durch einen Elektromotor angetrieben sein können. Vom Verdichteranschluß wird die Luft durch einen Verdichterkanal geleitet und verläßt das Modul durch den Anschluß, um in die zum Auspuff führende Zuführleitung zu gelangen. Mit Auspuff ist im weitesten Sinne der gesamte Ausleittrakt für die Verbrennungsgase, angefangen von den Zylinderauslässen gemeint. Bei einer Aufteilung der Zylinder auf mehrere Zylinderbänke können auch mehrere Zuführleitungen an der Brennkraftmaschine vorgesehen werden. Der Verdichterkanal kann sich dann innerhalb des Moduls verzweigen, wodurch der Verbindungsaufwand für Rohrweichen eingespart wird, und pro Zuführleitung einen Anschluß besitzen.

Die Verwendung des beschriebenen Moduls hat mehrere Vorteile. Zum eine ergibt sich durch die direkte Anbindung an das Saugrohr oder an den Motorblock der Brennkraftmaschine, insbesondere dem Zylinderkopf, eine außerordentlich kompakte Ausgestaltung. Dies spart nicht nur Bauraum sondern verkürzt zusätzlich die Leitungswege. Dadurch kann der Strömungswiderstand des Leitungssystemes verringert werden, zumal die Verdichterkanäle strömungsgünstig optimiert werden können. Die strömungsgünstige Gestaltung der Leitungen führt zu kürzeren Ansprechzeiten des Systems und dadurch zu einer verbesserten Funktion der Brennkraftmaschine. Das Modul kann als vormontierte Einheit z. B. von einem Systemlieferanten direkt zur Endmontage der Brennkraftmaschine geliefert werden. Hierdurch werden Fehlermöglichkeiten vermieden, die bei der Endmontage auftreten können. Zusätzlich läßt sich durch eine günstige Arbeitsteilung eine höhere Effizienz bei der Fertigung der Brennkraftmaschine erreichen. Das Modul kann sogar bereits vor Auslieferung an das Saugrohr angegliedert werden. Eine weitere Möglichkeit besteht darin, das Modul als integralen Bestandteil des Saugrohres auszuführen. Ein Teil der Kanalstrukturen und Anschlüsse kann dann durch die Gehäuseteile des Saugrohrs gebildet werden und zum Beispiel durch eine Abdeckung ergänzt werden.

Die Zuführleitungen der Brennkraftmaschine können in den Zylinderkopf integriert sein. In diesem Fall ist eine Anbindung oder Integration des Moduls sowohl an das Saugrohr als auch an der Zylinderkopf notwendig. Dadurch kann die Brennkraftmaschine noch kompakter ausgeführt sein. Die Zuführleitungen führen zum Auspuff der Brennkraftmaschine. In diesem Zusammenhang ist mit Auspuff der gesamte Ausleitungsweg der Verbrennungsgase von den Zylinderköpfen gemeint. Vorteilhaft wird die Sekundärluft vor dem Katalysator eingeleitet, um dessen Verhalten in der Kaltstartphase zu verbessern.

Nach einer weiteren Ausgestaltung der Erfindung kann der Verdichteranschluß derart ausgeführt sein, daß der Verdichter zumindest teilweise in das Modul integriert werden kann. Insbesondere, wenn der Verdichter eine hydrodynamische Strömungskraftmaschine ist, kann die Gehäuseschale für deren Laufrad als Teil des Moduls ausgeführt sein. Es wird dadurch die Fertigung der entsprechenden Gehäuseschalen am Verdichter eingespart. Ist das Modul als Gußteil ausgeführt, fällt hierdurch kein zusätzlicher Fertigungsaufwand an. Das Modul kann aus Kunststoff oder auch aus Leichtmetall, z.B. Aluminium, hergestellt werden.

Für den Fall, daß der Verdichter durch eine Turbine angetrieben wird, die zum Antrieb die Verbrennungsluft im Ansaugtrakt nutzt, ergibt sich eine besonders günstige Ausführungsform der Erfindung dadurch, daß ein Turbinenkanal in das Modul integriert ist, welcher in den Leitungsabschnitt des Saugrohrs mündet. Das andere Ende des Turbinenkanals wird durch einen Turbinenanschluß gebildet, der die Ableitung der Antriebsluft der Turbine und deren Montage am Modul gewährleistet. Zusätzlich kann auch eine Zuleitung vom Ansaugtrakt (vor der Drosselklappe) hin zur Turbine in das Modul integriert sein. Hierdurch wird der erfindungsgemäße Integrationsgedanke weitergetrieben.

Vorteilhafterweise kann die Turbine am Turbinenanschluß in der für den Verdichter bereits beschriebenen Weise teilweise in das Modul integriert sein. Durch entsprechende Gestaltung der Gehäuseschalen des Moduls kann sogar die gesamte Turbinenverdichtereinheit in das Modul integriert werden. Hierdurch läßt sich eine besonders hohe Bauteilintegration erreichen.

Eine weitere Variante der Erfindung ergibt sich, wenn die Steuerventile für die Sekundärluftmenge zumindest teilweise in das Modul integriert werden. Im Modul können hierfür entsprechende Anschlüsse vorgesehen werden, wodurch der Komponentenaufwand für das Sekundärluftsystem weiter verringert werden kann. Insbesondere können Modulventilsitze vorgesehen werden, wobei an das Modul handelsübliche Ventilkörper angegliedert werden können. Ebenso kann vorteilhafterweise mit den in der Zuführleitung notwendigen Rückschlagventilen verfahren werden. Diese können entsprechend teilweise in der Zuführleitung und teilweise im Modul oder sogar ganz im Modul integriert sein. Weiterhin kann ein Steuerventil für die Turbinen notwendig werden, welches ebenfalls in der beschriebenen Weise in das Modul integriert werden kann. Das Steuerventil für die Turbine ist im weiteren Sinne auch für die Steuerung der Sekundärluftmenge notwendig. Die Steuerventile können als Schaltventile (Stellungen auf und zu) und als stufenlose Ventile ausgeführt sein. Vorteilhaft ist die stufenlose Ausführung, da hierdurch die Sekundärluftmenge für jeden Betriebszustand der Brennkraftmaschine optimal dosiert werden kann.

Für den Fall, daß auch eine Abgasrückführung für die Brennkraftmaschine vorgesehen ist, kann gemäß einer Modifikation der Erfindung auch ein Abgaskanal in das Modul integriert werden, welcher die Zuführung der Abgases in den Leitungsabschnitt des Moduls gewährleistet. Auch hier entfällt der sonst notwendige Aufwand für den Anschluß. Zusätzlich kann vorteilhaft das notwendige Rückführventil für das Abgas zumindest teilweise in das Modul integriert sein.

Besonders vorteilhaft ist die Integration der Drosselklappe in den Leitungsabschnitt des Moduls. Insbesondere, wenn die Drosselklappe selbst als Modul ausgestaltet ist, kann diese leicht an den Anschluß des Moduls zum Saugrohr oder zum Ansaugtrakt vor dem Saugrohr angegliedert werden. Diese Anordnung ist auch für die Einleitung der Abgase vorteilhaft, da eine gute Durchmischung mit der Ansaugluft erreicht wird. Die Einmündung des Abgaskanals in den Leitungsabschnitt kann kostengünstig nach Gesichtspunkten der Strömungsmechanik hinsichtlich einer optimalen Durchmischung des Abgases mit der Ansaugluft ausgelegt werden.
Besonders vorteilhaft ist dabei eine Anordnung, bei der die Drosselklappe an der einen Seite des Moduls angebracht ist, im darauf folgenden Leitungsabschnitt im Modul der Abgaskanal und der Turbinenkanal zugeführt wird und am anderen Ende des Leitungsabschnittes der Sammelraum des Saugrohr beginnt.

Die verschiedenen Ausgestaltungen der Erfindung folgen alle einem möglichst weitgehenden Integrationsgedanken für das Modul. Die für den Anspruch beschriebenen Vorteile wirken sich desto mehr aus, je stärker der Integrationsgrad für das beschriebene Modul gewählt wird. Daher ist die Herstellung des Moduls als Teil des Saugrohrgehäuses die optimale Lösung.

Unabhängig vom Modul läßt sich jedoch der Integrationsgedanke gemäß einer weiteren Ausgestaltung der Erfindung auch direkt an der Brennkraftmaschine verwirklichen. Dies wird dadurch erreicht, daß die Abgasrückführung zumindest teilweise durch die Zuführleitung gebildet wird, die für die Sekundärluftleitung vorgesehen ist. Hierdurch lassen sich Leitungswege sparen, wobei der gemeinsame Abschnitt der Leitungssysteme entweder zur Abgasentnahme aus dem Auspuff oder zur Sekundärlufteinspeisung in den Auspuff genutzt wird. Diese Konstruktionsvariante macht sich den Umstand zu nutze, daß die Betriebszustände der Brennkraftmaschine bei Abgasrückführungen bzw. Sekundärlufteinblaßung nie gleichzeitig auftreten. Diese Gestaltung der Erfindung führt entsprechend der Aufgabenstellung zu einer Einsparung von Rohrleitungswegen mit den bereits beschriebenen Vorteilen der Bauraum- und Komponenteneinsparung.

Ein Modul für eine Brennkraftmaschine ist dazu geeignet, in die beschriebenen Anordnungen der Brennkraftmaschine eingebaut zu werden. ES trägt die erfindungsgemäßen Merkmale.

Das Modul kann weiterhin zumindest teilweise durch das Saugrohrgehäuse gebildet werden. Der Integrationsgedanke wird hierdurch weiter unterstützt. Es können z.B. Anschlüsse zwischen Modul und Saugrohrgehäuse eingespart werden. Im Idealfall ist das ganze Modul Teil des Saugrohrgehäuses. Die Gehäusestruktur des Saugrohrs kann dann als ganzes gefertigt werden. Fertigungsschritte für die Herstellung eines zusätzlichen Moduls fallen daher weg. Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: das Blockschaltbild einer Brennkraftmaschine mit Ansaugtrakt und Auspuff, wobei mögliche Systemgrenzen des Moduls angedeutet sind,
- Figur 2: eine dreidimensionale Ansicht des Moduls, angebaut an das Saugrohr einer Brennkraftmaschine mit V-förmiger Zylinderanordnung,
- Figur 3: das Basisteil des Moduls in der dreidimensionalen Ansicht vom Saugrohr gesehen,
- Figur 4: das Basisteil gemäß Figur 3 in der dreidimensionalen Ansicht von der Drosselklappe aus gesehen und
- Figur 5: eine Variante des Detail X gemäß Figur 4 mit Einbauraum für eine Turbinenschaufel.

### Beschreibung der Ausführungsbeispiele

Durch die schematisch dargestellte Brennkraftmaschine gemäß Figur 1 nimmt die Verbrennungsluft folgenden Weg, gekennzeichnet durch Doppelpfeile. Sie betritt durch einen Ansaugstutzen 10 einen Ansaugtrakt 11, durchtritt einen Luftfilter 12, passiert eine Drosselklappe 13, wird durch einen Leitungsabschnitt 14 in einem Modul 15 in einen Sammelraum 16 eines Saugrohrs 17 geleitet, gelangt durch Saugkanäle 18 in einen Zylinderkopf 19, wird in Zylindern 20 verbrannt und verläßt durch einen Auspuff 21 die Brennkraftmaschine. Weiterhin ist die Brennkraftmaschine mit einem Leitungssytem zur Sekundärlufteinblaßung und zur Abgasrückführung ausgestattet. Die Luftströme in diesem Leitungssystem durch einfache Pfeile gekennzeichnet. Zur Sekundärlufteinblaßung wird Ansaugluft dem Ansaugtrakt 11 entnommen und durch eine Entnahmeleitung 22 einem Verdichter 23 zugeführt. Dieser weist einen Verdichteranschluß 24 auf, durch den die Sekundärluft in einen Verdichterkanal 25 eingespeist wird. Dort passiert sie ein Steuerventil 26a und ein Rückschlagventil 27 und tritt durch einen weiteren Anschluß 28 in eine Zuführleitung 29 ein, die in den Auspuff 21 mündet.

Die Zuführleitung 29 wird gleichzeitig für die Abgasentnahme genutzt. Das Abgas betritt durch den Anschluß 28 das Modul 15, wobei das Rückschlagventil 27 eine Rückleitung zum Verdichter verhindert. Von dem Verdichterkanal 25 zweigt jedoch ein Abgaskanal 30 ab, der eine Einleitung des Abgases in den Leitungsabschnitt 14 kurz hinter der Drosselklappe 13 ermöglicht. Zur Steuerung des Abgasstroms ist ein Rückführventil 31 vorgesehen.

Der Verdichter 23 wird durch eine Turbine 32 angetrieben. Diese nutzt den durch die Drosselklappe 13 verursachten Druckunterschied im Ansaugtrakt 11, in dem sie Ansaugluft durch eine Zuleitung 33 vor der Drosselklappe entnimmt, welche über einen Turbinenanschluß 34 in einen Turbinenkanal 35, der Teil des Moduls 15 ist und in den Leitungsabschnitt 14 hinter der Drosselklappe 13 mündet, in den Ansaugtrakt 11 zurückgeleitet wird. Im Turbinenkanal ist ein Steuerventil 26b vorgesehen. Die Drosselklappe 13 weist eine Aktuator 36 zur stufenlosen Verstellung auf.

Der Figur 2 läßt sich eine schematische Darstellung der Räumlichen Anordnung aller beteiligten Bauteile der Brennkraftmaschine gemäß Figur 1 entnehmen. Dieses Beispiel zeigt einen Motorblock 37 mit v-förmiger Anordnung der Zylinder auf zwei Zylinderbänken 38. Die einzelnen Bauteile sind durch die Bezugszeichen entsprechend Figur 1 gekennzeichnet und werden daher nicht nochmals beschrieben. Allerdings ergeben sich aufgrund der geometrischen Anordnung folgende Besonderheiten.

Die Zuführleitung 29 ist nicht zu sehen, da sie in den Zylinderkopf integriert ist. Für jede Zylinderbank 38 gibt es eine Zuführleitung, wobei diese über Eingangsöffnungen 39 am Zylinderkopf zugänglich sind. An diesen Eingangsöffnungen ist das Modul mit den Anschlüssen 28 befestigt. Das Modul 15 ist scheibenförmig aufgebaut. Es ist am Ende des Saugrohres angeflanscht, wobei der Leitungsabschnitt 14 in einen Einlaß 40 in den Sammelraum des Saugrohrs mündet. Auf der anderen Seite des Leitungsabschnittes 14 ist die Drosselklappe an einer Aufnahme 41 befestigt.

Alternativ (nicht dargestellt) kann das Modul als integraler Bestandteil des Saugrohres ausgeführt sein. Damit entfällt eine Flanschverbindung zwischen Modul und Saugrohr. Anstelle des scheibenförmigen Aufbaus kann das integrierte Modul z.B. zusammen mit dem Saugrohr in Kernausschmelztechnik hergestellt werden.

Die Abzweigung des Abgaskanals 30 vom Verdichterkanal geschieht außerhalb des Modulkörpers. Das Rückführventil 31 ist an den sichtbaren Abschnitt des Abgaskanals 30 angebracht und führt in den Grundkörper 42 hinein. Dort befindet sich ein zweiter Abschnitt des Abgaskanals 31, der in Figur 2 nicht sichtbar ist.

Ein möglicher Aufbau des Grundkörpers 42 für das Modul läßt sich den Figuren 3 und 4 entnehmen. Es lassen sich die beiden Seiten des Grundkörpers erkennen, wobei beide mit Abschlußplatten versehen werden, so daß sich geschlossene Kanalstrukturen bilden. Alternativ könnte der Grundkörper als Teil des Saugrohrgehäuses ausgeführt sein, wodurch eine der Abschlußplatten wegfallen würde. Die im Modul befindlichen Kanalabschnitte sind mit den Bezugszeichen entsprechend Figur 1 versehen und sollen nicht genauer beschrieben werden. Es ergeben sich jedoch folgende Besonderheiten.

Zunächst fällt der außerordentlich kurze Leitungsabschnitt 14 auf. Dieser ist nicht länger als der Grundkörper 42 dick ist. In diesem kurzen Abschnitt läßt sich sowohl die Zuführung des Turbinenkanals 35 als auch des Abgaskanals 30 realisieren. An den Grundkörper kann, wie zu Figur 2 beschrieben, noch die Drosselklappe angegliedert werden. Diese verlängert den Leitungsabschnitt um den Betrag der Dicke des Drosselklappenmoduls. Die Drosselklappe kann als Teil des Moduls aufgefaßt werden.

Der Grundkörper 42 weist diverse Ventilanschlüße 43a bis 43d auf. Dies sind im einzelnen Ventilanschlüße 43a für die Rückschlagventile 27, ein Ventilanschluß 43b für das Rückführventil 31, ein Ventilanschluß 43c für das Steuerventil 26a und ein Ventilanschluß 43d für das Steuerventil 26b. Der Ventilanschluß 43b sowie der Turbinenanschluß 34 und der Verdichteranschluß 24 sind als Öffnungen in den nicht dargestellten Abschlußplatte des Grundkörpers 42 ausgeführt und daher nur durch gestrichelte Kreise dargestellt. Für die Steuerventile 26a, b sind weiterhin Ventilsitze 44 im Grundkörper 42 vorgesehen. Dies ermöglicht eine teilweise Integration dieser Ventile in den Grundkörper.

Die Ventilsitze wirken mit den nicht dargestellten Ventiltellern der Steuerventile 26a, b zusammen, die durch die Aufnahmen 43c, d in den Grundkörper hineingesteckt werden.

Figur 5 stellt eine alternative Ausgestaltung des Grundkörpers 42 dar. Der Turbinenanschluß 34a ist derart ausgebildet, daß das Schaufelrad der Turbine in den Grundkörper 42 hineinreichen kann. Hierdurch wird eine Gehäuseschale der Turbine eingespart. Der Turbinenanschluß 34a ist entsprechend der Außenkonturen des nicht dargestellten Schaufelrades der Turbine trichterförmig ausgebildet. Er mündet direkt in den Turbinenkanal 35. Ein entsprechender Verbindungskanal 45 ist gestrichelt dargestellt.

## Patentansprüche

1. Brennkraftmaschine, welche
- einen Motorblock (37) mit einem Zylinderkopf (19),
- einen Ansaugtrakt (11) für die Verbrennungsluft mit einem Saugrohr (17), bestehend aus einem Sammelraum (16) und Saugkanälen (18) und
- einen Auspuff (21)
aufweist, mit einem Leitungssystem für Sekundärluft, welches
- eine Entnahmeleitung (22) für Sekundärluft aus dem Ansaugtrakt hin zu
- einem Verdichter (23) für die Sekundärluft und von diesem ausgehend
- mindestens eine Zuführleitung (29) für die Sekundärluft in den Auspuff (21)
aufweist, wobei zumindest ein Verdichterkanal (25) mit einem Anschluß (28) für jede Zuführleitung (29), ein Verdichteranschluß (24) und ein Leitungsabschnitt (14) des Ansaugtraktes in einem Modul (15) zusammengefaßt sind, **dadurch gekennzeichnet, daß** das Modul direkt an das Saugrohr (17) angebunden ist, derart, dass die Luft durch den Leitungsabschnitt (14)in das Saugrohr geleitet wird.

2. Brennkraftmaschine nach Anspruch 1, **dadurch gekennzeichnet, daß** der Verdichter (23) am Verdichteranschluß (24) zumindest teilweise in das Modul (15) integriert ist.

3. Brennkraftmaschine nach einem der vorherigen Ansprüche, wobei der Verdichter mit einer Turbine (32) verbunden ist, die zum Antrieb durch die Verbrennungsluft mit einer vor einer Drosselklappe (13) in den Ansaugtrakt (11) mündenden Zuleitung (33) und einer nach der Drosselklappe (13) in den Ansaugtrakt (11) mündenden Ableitung versehen ist, **dadurch gekennzeichnet, daß** die Ableitung durch einen Turbinenkanal (35) gebildet ist, der in das Modul (15) integriert ist, in den Leitungsabschnitt (14) mündet und einen Turbinenanschluß (34, 34a) für die Turbine (32) aufweist.

4. Brennkraftmaschine nach Anspruch 3, **dadurch gekennzeichnet, daß** die Zuleitung (33) in das Modul integriert ist.

5. Brennkraftmaschine nach Anspruch 3, **dadurch gekennzeichnet, daß** die Turbine (32) am Turbinenanschluß (34, 34a) zumindest teilweise in das Modul (15) integriert ist.

6. Brennkraftmaschine nach einem der vorherigen Ansprüche, wobei zur Steuerung der Sekundärluftmenge mindestens ein Steuerventil (26a, 26b) vorgesehen ist, **dadurch gekennzeichnet, daß** dieses zumindest teilweise in das Modul integriert ist.

7. Brennkraftmaschine nach einem der vorherigen Ansprüche, wobei für die Zuführleitung (29) mindestens ein Rückschlagventil (27) vorgesehen ist, **dadurch gekennzeichnet, daß** dieses zumindest teilweise in das Modul integriert ist.

8. Brennkraftmaschine nach einem der vorherigen Ansprüche, wobei diese eine Abgasrückführung (29, 30, 31) mit einem Rückführventil (31) aufweist, **dadurch gekennzeichnet, daß** die Abgasrückführung teilweise durch einen Abgaskanal (30) gebildet wird, der in das Modul (15) integriert ist und in den Leitungsabschnitt (14) mündet.

9. Brennkraftmaschine nach Anspruch 7, **dadurch gekennzeichnet, daß** das Rückführventil (31) zumindest teilweise in das Modul integriert ist.

10. Brennkraftmaschine nach einem der vorherigen Ansprüche, **dadurch gekennzeichnet, daß** am Leitungsabschnitt (14) eine Aufnahme (41) für die Drosselklappe (13) vorgesehen ist.

11. Brennkraftmaschine nach einem der vorherigen Ansprüche, **dadurch gekennzeichnet, daß** das Modul (15) derart an dieser befestigt ist, daß der Leitungsabschnitt (14) in einen Einlaß (40) des Saugrohrs mündet.

12. Brennkraftmaschine nach einem der vorherigen Ansprüche, **dadurch gekennzeichnet, daß** das Modul (15) derart an dieser befestigt ist, daß der Anschluß (28) des Verdichterkanals (25) in eine Eingangsöffnung (39) der in den Zylinderkopf integrierten Zuführleitung (29) mündet.

13. Brennkraftmaschine, nach einem der vorherigen Ansprüche, wobei die Zuführleitung mit einem Ventil, insbesondere einem Rückschlagventil (27), ausgestattet ist und ein Leitungssystem zur Abgasrückführung, welches, zur Steuerung ein Rückführventil (31) aufweist, **dadurch gekennzeichnet, daß** die Abgasrückführung teilweise durch die Zuführleitung (29) gebildet ist, wobei Ventil in der Zuführleitung und das Rückführventil (31) parallel geschaltet sind.

14. Modul (15) für eine Brennkraftmaschine, welche
- einen Motorblock (37) mit einem Zylinderkopf (19),
- einen Ansaugtrakt (11) für die Verbrennungsluft mit einem Saugrohr (17), bestehend aus einem Sammelraum (16) und Saugkanälen (18) und
- einen Auspuff (21)
aufweist, mit einem Leitungssystem für Sekundärluft, welches
- eine Entnahmeleitung (22) für Sekundärluft aus dem Ansaugtrakt hin zu
- einem Verdichter (23) für die Sekundärluft und von diesem ausgehend
- mindestens eine Zuführleitung (29) für die Sekundärluft in den Auspuff (21) aufweist,
wobei in diesem Modul zumindest ein Verdichterkanal (25) für die Sekundärlufteinleitung in jede Zuführleitung (29) und ein Leitungsabschnitt (14) für die Leitung von Verbrennungsluft als Teil des Ansaugtraktes integriert sind, **dadurch gekennzeichnet, daß** das Modul für die Anbindung direkt an das Saugrohr (17) vorgesehen ist, so dass die Luft durch den Leitungsabschnitt (14) in das Saugrohr geleitet wird.

15. Saugrohr für eine Brennkraftmaschine, welche
- einen Motorblock (37) mit einem Zylinderkopf (19),
- einen Ansaugtrakt (11) für die Verbrennungsluft mit dem Saugrohr (17), bestehend aus einem Sammelraum (16) und Saugkanälen (18) und
- einen Auspuff (21)
aufweist, mit einem Leitungssystem für Sekundärluft, welches
- eine Entnahmeleitung (22) für Sekundärluft aus dem Ansaugtrakt hin zu
- einem Verdichter (23) für die Sekundärluft und von diesem ausgehend
- mindestens eine Zuführleitung (29) für die Sekundärluft in den Auspuff (21) aufweist,
wobei in ein Modul zumindest ein Verdichterkanal (25) für die Sekundärlufteinleitung in jede Zuführleitung (29) und ein Leitungsabschnitt (14) für die Leitung von Verbrennungsluft als Teil des Ansaugtraktes integriert sind, **dadurch gekennzeichnet, daß** das Modul zumindest teilweise durch das Saugrohrgehäuse des Ansaugtraktes (11) gebildet wird.

## Claims

1. Internal combustion engine, which includes
- a engine block (37) with a cylinder head (19),
- an intake duct (11) for the air of combustion with an intake pipe (17), comprising an accumulator chamber (16) and intake conduits (18) and
- an exhaust (21),
including a line system for secondary air, which includes
- an extraction line (22) for removing secondary air from the intake duct and passing it on to
- a compressor (23) for the secondary air and, proceeding from here,
- at least one supply line (29) for the secondary air to pass into the exhaust (21),
at least one compressor conduit (25) with a connection (28) for each supply line (29), a compressor connection (24) and a line portion (14) of the intake duct being combined in one module (15), **characterised in that** the module (15) is connected directly to the intake pipe (17), in such a manner that the air is passed through the line portion (14) into the intake pipe.

2. Internal combustion engine according to claim 1, **characterised in that** the compressor (23) is integrated at least partially into the module (15) at the compressor connection (24).

3. Internal combustion engine according to one of the preceding claims, the compressor being connected to a turbine (32), which, for driving purposes by means of the air of combustion, is provided with a supply line (33), which terminates upstream of a throttle valve (13) into the intake duct (11), and an outlet line, which terminates downstream of the throttle valve (13) into the intake duct (11), **characterised in that** the outlet line is formed by a turbine conduit (35), which is integrated into the module (15), terminates into the line portion (14) and includes a turbine connection (34, 34a) for the turbine (32).

4. Internal combustion engine according to claim 3, **characterised in that** the supply line (33) is integrated into the module.

5. Internal combustion engine according to claim 3, **characterised in that** the turbine (32) is integrated at least partially into the module (15) at the turbine connection (34, 34a).

6. Internal combustion engine according to one of the preceding claims, at least one control valve (26a, 26b) being provided for controlling the volume of secondary air, **characterised in that** this control valve is integrated at least partially into the module.

7. Internal combustion engine according to one of the preceding claims, at least one non-return valve (27) being provided for the supply line (29) **characterised in that** this non-return valve is integrated at least partially into the module.

8. Internal combustion engine according to one of the preceding claims, said internal combustion engine including an exhaust gas recirculation (29, 30, 31) with a return valve (31), **characterised in that** the exhaust gas recirculation is formed partially by an exhaust gas conduit (30), which is integrated into the module (15) and terminates into the line portion (14).

9. Internal combustion engine according to claim 7, **characterised in that** the return valve (31) is integrated at least partially into the module.

10. Internal combustion engine according to one of the preceding claims, **characterised in that** a receiving means (41) for the throttle valve (13) is provided on the line portion (14).

11. Internal combustion engine according to one of the preceding claims, **characterised in that** the module (15) is secured to the internal combustion engine in such a manner that the line portion (14) terminates into an inlet (40) of the intake pipe.

12. Internal combustion engine according to one of the preceding claims, **characterised in that** the module (15) is secured to the internal combustion engine in such a manner that the connection (28) of the compressor conduit (25) terminates into an inlet opening (39) of the supply line (29), which is integrated into the cylinder head.

13. Internal combustion engine according to one of the preceding claims, the supply line being provided with a valve, more especially a non-return valve (27), and a line system for exhaust recirculation, which includes a return valve (31) for controlling purposes, **characterised in that** the exhaust gas recirculation is formed partially by the supply line (29), the valve in the supply line and the non-return valve (31) being connected in parallel.

14. Module (15) for an internal combustion engine, which includes
- a engine block (37) with a cylinder head (19),
- an intake duct (11) for the air of combustion with an intake pipe (17), comprising an accumulator chamber (16) and intake conduits (18) and
- an exhaust (21),
having a line system for secondary air, which includes
- an extraction line (22) for removing secondary air from the intake duct and passing it on to
- a compressor (23) for the secondary air and proceeding from here
- at least one supply line (29) for the secondary air to pass into the exhaust (21),
at least one compressor conduit (25) for the secondary air intake line into each supply line (29) and one line portion (14) for the line of air of combustion being integrated as part of the intake duct in this module, **characterised in that** the module is provided for the connection directly to the intake pipe (17) such that the air is passed through the line portion (14) into the intake pipe.

15. Intake pipe for an internal combustion engine, which includes
- a engine block (37) with a cylinder head (19),
- an intake duct (11) for the air of combustion with the intake pipe (17), comprising an accumulator chamber (16) and intake conduits (18) and
- an exhaust (21),
having a line system for secondary air, which includes
- an extraction line (22) for removing secondary air from the intake duct and passing it on to
- a compressor (23) for the secondary air and, proceeding from here,
- at least one supply line (29) for the secondary air to pass into the exhaust (21),
at least one compressor conduit (25) for the secondary air into each supply line (29) and one line portion (14) for the line of air of combustion being integrated as part of the intake duct into one module, **characterised in that** the module is formed at least partially by the intake pipe housing of the intake duct (11).

## Revendications

1. Moteur à combustion interne qui comprend :
- un bloc moteur (37) muni d'une culasse (19) ;
- un conduit d'admission (11) pour l'air comburant, comprenant un tube d'admission (17) composé d'une chambre collectrice (16) et de canaux d'admission (18), et
- un échappement (21),
et qui comprend un système de conduites pour l'air secondaire qui comprend :
- une conduite de prise (22) pour prendre de l'air secondaire sur le conduit d'admission et l'envoyer vers
- un compresseur (23) pour l'air secondaire et, à la sortie de ce dernier,
- au moins une conduite d'alimentation (29) pour l'air secondaire menant à l'échappement (21),
- dans lequel au moins un canal de compresseur (25) comprenant un raccord (28) pour chaque conduite d'alimentation (29), un raccord de compresseur (24) et un tronçon de conduite (14) du conduit d'admission, sont regroupés dans un module (15),
**caractérisé en ce que**
le module est relié directement au tube d'admission (17) de telle manière que l'air soit conduit au tube d'admission par le tronçon de conduite (14).

2. Moteur à combustion interne selon la revendication 1,
**caractérisé en ce que**
le compresseur (23) est intégré au moins partiellement dans le module (15) au niveau du raccord de compresseur (24).

3. Moteur à combustion interne selon l'une des revendications précédentes, dans lequel le compresseur est relié à une turbine (32) qui est munie, pour être entraînée par l'air comburant, d'une conduite d'arrivée (33) qui débouche dans le conduit d'admission (11) en amont d'un volet d'étranglement (13), et d'une conduite de départ qui débouche dans le conduit d'admission (11) en aval du volet d'étranglement (13),
**caractérisé en ce que**
la conduite de départ est formée par un canal de turbine (35) qui est intégré dans le module (15), débouche dans le tronçon de conduite (14) et présente un raccord de turbine (34, 34a) pour la turbine (32).

4. Moteur à combustion interne selon la revendication 3,
**caractérisé en ce que**
la conduite d'arrivée (33) est intégrée dans le module.

5. Moteur à combustion interne selon la revendication 3,
**caractérisé en ce que**
la turbine (32) est intégrée au moins partiellement dans le module (15) au niveau du raccord de turbine (34, 34a).

6. Moteur à combustion interne selon l'une des revendications précédentes, dans lequel au moins une soupape de commande (26a, 26b) est prévue pour la commande de la quantité d'air secondaire,
**caractérisé en ce que**
cette soupape est intégrée au moins partiellement dans le module.

7. Moteur à combustion interne selon l'une des revendications précédentes, dans lequel au moins un clapet anti-retour (27) est prévu pour la conduite d'alimentation (29),
**caractérisé en ce que**
ce clapet est intégré au moins partiellement dans le module.

8. Moteur à combustion interne selon l'une des revendications précédentes, où ce moteur présente un recyclage des gaz d'échappement (29, 30, 31) équipé d'une soupape de recyclage (31),
**caractérisé en ce que**
le recyclage des gaz d'échappement est formé en partie par un canal de gaz d'échappement (30) qui est intégré dans le module (15) et débouche dans le tronçon de conduite (14).

9. Moteur à combustion interne selon la revendication 7,
**caractérisé en ce que**
la soupape de recyclage (31) est au moins partiellement intégrée dans le module.

10. Moteur à combustion interne selon une des revendications précédentes,
**caractérisé en ce qu'**
un logement (41) pour le volet d'étranglement (13) est prévu sur le tronçon de conduite (14).

11. Moteur à combustion interne selon l'une des revendications précédentes,
**caractérisé en ce que**
le module (15) est fixé à ce moteur de telle manière que le tronçon de conduite (14) débouche dans une entrée (40) du tube d'admission.

12. Moteur à combustion interne selon une des revendications précédentes,
**caractérisé en ce que**
le module (15) est fixé à ce moteur de telle manière que le raccord (28) du canal de compresseur (25) débouche dans une ouverture d'entrée (39) de la conduite d'alimentation (29) intégrée dans la culasse.

13. Moteur à combustion interne selon une des revendications précédentes, dans lequel la conduite d'alimentation est équipée d'une soupape, en particulier d'un clapet anti-retour (27) et un système de conduites pour le recyclage des gaz d'échappement qui présente une soupape de recyclage (31) pour la commande,
**caractérisé en ce que**
le recyclage des gaz d'échappement est partiellement formé par la conduite d'alimentation (29), la soupape placée dans la conduite d'alimentation et la soupape de recyclage (31) étant branchées en parallèle.

14. Module (15) pour un moteur à combustion interne qui comprend
- un bloc moteur (37) muni d'une culasse (19) ;
- un conduit d'admission (11) pour l'air comburant, comprenant un tube d'admission (17) composé d'une chambre collectrice (16) et de canaux d'admission (18), et
- un échappement (21),
et qui comprend un système de conduite pour l'air secondaire qui comprend :
- une conduite de prise (22) pour envoyer l'air secondaire du conduit d'admission vers
- un compresseur (23) pour l'air secondaire et, à la sortie de ce dernier,
- au moins une conduite d'alimentation (29) pour l'air secondaire menant à l'échappement (21),
- au moins un canal de compresseur (25) pour l'introduction d'air secondaire dans chaque conduite d'alimentation (29) et un tronçon de conduite (14) pour conduire l'air comburant étant intégrés dans ce module en constituant une partie du conduit d'admission,
**caractérisé en ce que**
le module est prévu pour se raccorder directement au tube d'admission (17), de sorte que l'air est envoyé dans le tube d'admission en passant par le tronçon de conduite (14).

15. Tube d'admission pour un moteur à combustion interne qui comprend :
- un bloc moteur (37) muni d'une culasse (19) ;
- un conduit d'admission (11) pour l'air comburant, comprenant le tube d'admission (17), composé d'une chambre collectrice (16) et de canaux d'admission (18), et
- un échappement (21),
et qui comprend un système de conduites pour de l'air secondaire, lequel comprend :
- une conduite de prise (22) pour envoyer l'air secondaire du conduit d'admission vers
- un compresseur (23) pour l'air secondaire et, à la sortie de ce dernier,
- au moins une conduite d'alimentation (29) pour l'air secondaire menant à l'échappement (21),
- dans lequel, au moins un canal de compresseur (25) pour l'introduction d'air secondaire dans chaque conduite d'alimentation (29), et un tronçon de conduite (14) destiné à conduire l'air comburant, sont intégrés dans un module en constituant une partie du conduit d'admission,
**caractérisé en ce que**
le module est au moins partiellement formé par le corps de tube d'admission qui fait partie du conduit d'admission (11).
